Europäisches Patentamt

European Patent Office

Office européen des brevets

(19)

(11) Veröffentlichungsnummer: **0 267 393**
B1

(12) # EUROPÄISCHE PATENTSCHRIFT

(45) Veröffentlichungstag der Patentschrift:
11.04.90

(51) Int. Cl.⁴: **G21F 9/20**, G21F 9/06

(21) Anmeldenummer: 87113885.5

(22) Anmeldetag: 23.09.87

(54) Verfahren zur Verbesserung der Kritikalitätssicherheit in einem Flüssig-Flüssig-Extraktionsprozess für bestrahlte Kernbrenn- und/oder Brutstoffe.

(30) Priorität: 14.11.86 DE 3639066

(43) Veröffentlichungstag der Anmeldung:
18.05.88 Patentblatt 88/20

(45) Bekanntmachung des Hinweises auf die Patenterteilung:
11.04.90 Patentblatt 90/15

(84) Benannte Vertragsstaaten:
CH DE FR GB IT LI SE

(56) Entgegenhaltungen:
EP-A- 0 070 213

I.KOBAYASHI et al. "Critical Experiments Facility and
Criticality Safety Programs at Jaeri",October 1985
JAPAN ATOMIC ENERGY RESEARCH
INSTITUTE,Tokaimura-Report Jaeri-M-85-152 (1985)

(73) Patentinhaber: KERNFORSCHUNGSZENTRUM
KARLSRUHE GMBH, Weberstrasse 5 Postfach 3640,
D-7500 Karlsruhe 1(DE)

(72) Erfinder: Petrich, Georg, Dr., Friedrich-Wolff-Strasse 49,
D-7500 Karlsruhe(DE)
Erfinder: Schmieder, Helmut, Dr., Grünewaldstrasse 56,
D-7500 Karlsruhe(DE)

**Beschreibung**

Die Erfindung betrifft ein Verfahren zur Verbesserung der Kritikalitätssicherheit in einem Flüssig-flüssig-Extraktionsprozeß für bestrahlte Kernbrenn- und/oder Brutstoffe, insbesondere bei nicht bestimmungsgemäßen Betriebszuständen.

Einer der bekanntesten Flüssig-flüssig-Extraktionsprozesse für bestrahlte Kernbrenn- und/oder Brutstoffe ist der sogenannte PUREX-Prozeß, bei welchem die Wertstoffe Uran und Plutonium von den sie begleitenden Spaltprodukten, Korrosions- und Aktivierungs-Produkten, Neptunium, weiteren Transuranelementen und anderen Verunreinigungs-Produkten durch Extraktion aus der salpetersauren Auflöser-Lösung der Brenn-bzw. Brutelemente mit dem organischen Extraktionsmittel Tri-n-butylphosphat (TBP), gelöst in einem organischen Lösungs-bzw. Verdünnungsmittel, getrennt werden. Die Trennung wird durch die unterschiedlich großen Verteilungskoeffizienten der einzelnen chemischen Spezies in TBP ermöglicht. Die Komplexstärken können etwa durch folgende Reihenfolge veranschaulicht werden: $UO_2^{2+}>NpO_2^{2+}>Pu(IV)>Np(IV)\sim U(IV)\gg Zr,Ru$ (stellvertretend für alle anderen Spaltprodukte etc.)

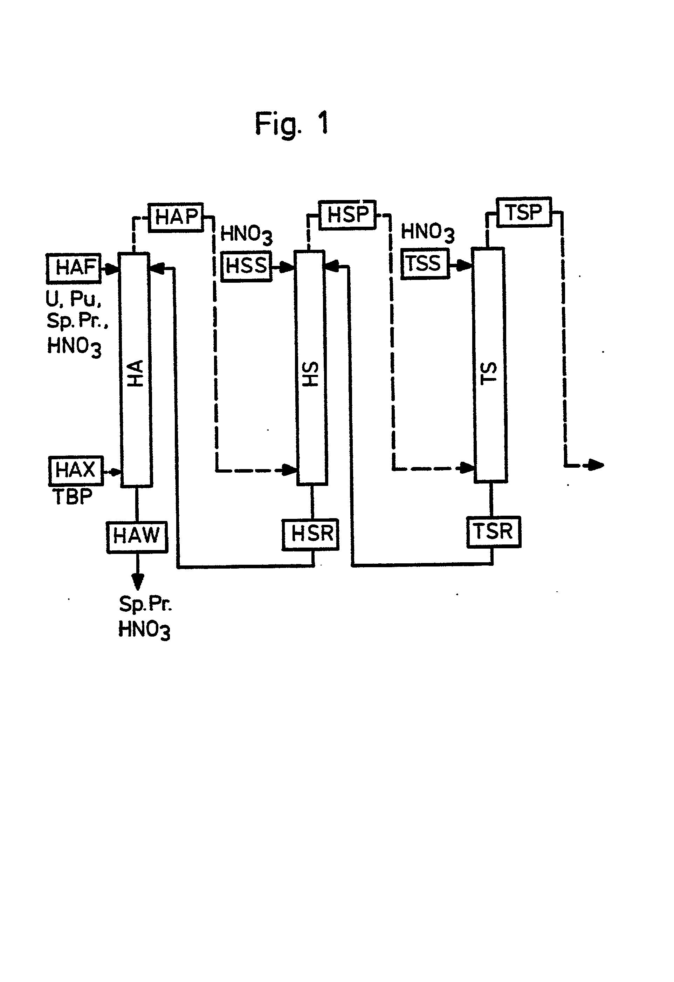

Als Gegenstromextraktions-Apparaturen werden sowohl mehrstufige Mischabsetzer und Zentrifugalextraktoren als auch pulsierte Siebbodenkolonnen verwendet. In dem Bereich Extraktion der Wertstoffe und Spaltproduktwäsche, beispielsweise in den Kolonnen HA, HS, und TS der Figur 1 wird die Abtrennung der schlecht extrahierbaren Spaltprodukte im Teilbereich der Spaltproduktwäsche durch verschiedene Maßnahmen unterstützt:

1. Insbesondere zur besseren Ru-Abtrennung wird der Wäscher HS bei einer höheren $HNO_3$-Konzentration betrieben (bei ca. 4 mol $HNO_3$/l).
2. Zur besseren Zr-Abtrennung wird der mit TS bezeichnete Wäscher bei einer niedrigeren $HNO_3$-Konzentration als bei der Extraktion betrieben (bei ca. 1 mol $HNO_3$/l).
3. Generell wird die Sättigung des Extraktionsmittels mit den gut extrahierbaren $UO_2^{2+}$- und Pu(IV)-Ionen so hoch wie möglich angestrebt, um das Angebot an freiem TBP, das Komplexe mit Spaltprodukten bilden kann, so niedrig wie möglich zu halten.
4. Die Salpetersäurekonzentration in der wäßrigen Speiselösung HAF vor der Extraktion der Wertstoffe wird auf etwa 3 mol/l eingestellt, weil diese Konzentration für die Abtrennung von Zr und Ru schon im ersten Extraktor HA einen Kompromiß darstellt. Zr wird bei hoher Säurekonzentration mitextrahiert, während Ru nur bei niederer Säurekonzentration in die organische Phase übergeht.

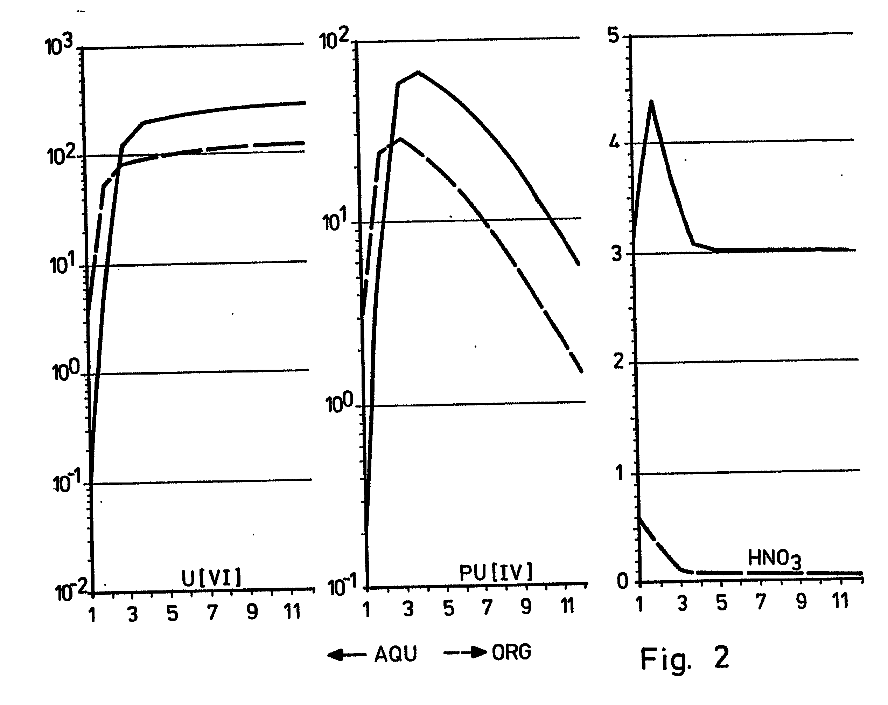

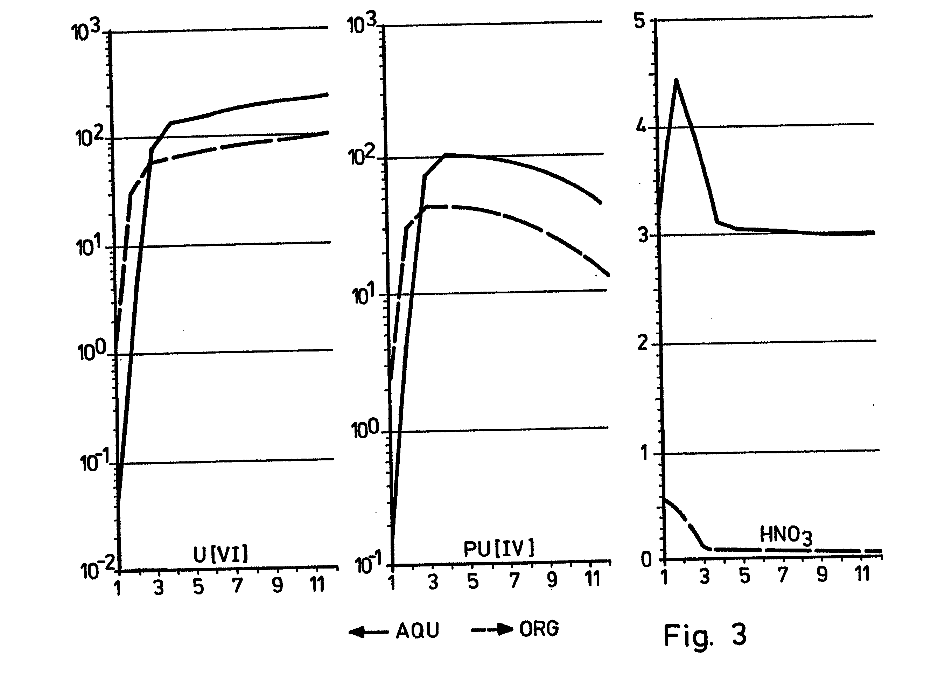

Bei der angestrebten hohen Sättigung des Extraktionsmittels wird der traditionelle Prozeß in einem empfindlichen Bereich betrieben, weil nämlich schon kleine Änderungen in den äußeren Parametern, wie z.B.:
- Senkung des Extraktionsmittelflusses, HAX,
- Erhöhung des Flusses der Speiselösung, HAF,
- Nichtbestimmungsgemäße, zu niedere $HNO_3$-Konzentration in der Speiselösung, HAF,
- Nichtbestimmungsgemäße, zu hohe U- und Pu-Konzentration in der Speiselösung, HAF
Verluste von U aber auch vor allem Pu in die wäßrige Abfall-Lösung HAW verursachen können (siehe Fig.2). Besonders nachteilig wirkt sich dabei aus, daß aufgrund der geringeren Komplexbildung bevorzugt das wertvollere und auch giftigere Pu in die wäßrige Abfall-Lösung HAW abläuft. Dadurch können im Extremfall Kritikalitätsprobleme im nachfolgenden Konzentrierungs- und Verarbeitungsprozeß der wäßrigen Abfall-Lösung auftreten. Deshalb muß im industriellen Prozeß der Pu-Gehalt im HAW ständig und exakt durch aufwendige Betriebsanalysen kontrolliert werden. Ein in kritisch sicherer Bauweise installiertes, kompliziertes Analysenbehältersystem stellt ein Durchbrechen von Chargen zu hoher Pu-Konz in den Konzentrierungsverdampfer sicher. Eine automatische und zuverlässige Kontrollinstrumentierung ist für diesen Zweck bis heute noch nicht verfügbar. Ein weiteres die Kritikalitätssicherheit berührendes Problem sind die im nichtbestimmungsgemäßen Betrieb in allen Typen von Extraktionsapparaten auftretenden peakartigen Akkumulationen von Pu. Diese können im Extremfall Spitzenkonzentrationen von einigen zehn Gramm Pu pro Liter der wäßrigen Phase erreichen, wie die entsprechenden Kurven in den Fig. 2 und 3 zeigen, die für Leichtwasserreaktor- und Schnellbrüterreaktor-Brennstoff-zusammensetzungen berechnet wurden. Experimentelle Untersuchungen zu diesem Problem (W.Ochsenfeld, H. Schmieder, S. Theiss, KfK-Bericht 911, Seiten 15-16, (1970)) beschäftigten die Fachwelt seit etwa Anfang der siebziger Jahre. Z.B. wurden erst neuerdings zur Untersuchung dieses Problems in der BRD aber auch im Ausland (I.Kobayashi et al., Japan At.Energy Research Inst., Report JAERI-M 85-152 (1985)) aufwendige und teure Extraktionsversuchsstände errichtet.

Ein bei Pu-Akkumulationen zusätzlich auftretendes Problem ist die Bildung von einer dritten, schweren organischen Phase im Extraktionsapparat. Diese Gefahr tritt etwa bei Pu-Konzentrationen von 25g/l organischer Phase und höher auf. Je nach den Bedingungen korrespondiert damit eine wäßrige Pu-Konzentration von 10 oder einigen zehn Gramm pro liter, d.h. eben eine solche Konzentration, wie sie bei den oben genannten Pu-Akkumulationen im nichtbestimmungsgemäßen Betrieb auftreten kann. Die dritte schwere organische Phase kann Pu in Konzentrationen von 50 g/l und mehr enthalten. Weil sie schwerer als die wäßrige Phase ist, muß mit unkontrollierten Ansammlungen in den Extraktionsapparaten gerechnet werden, was im Kritikalitätskonzept berücksichtigt werden muß. Die Kritikalitätssicherheit innerhalb der Extraktionsapparate wird durch geometrische Maßnahmen und/oder, je nach Größe, durch Anwendung von homogenen oder heterogenen Neutronengiften, sichergestellt (H. Schmieder et al., KfK-Bericht 2940, Seite 144 (1980)). Zusätzlich wird häufig noch eine Sicherheitsinstrumentierung (Neutronenmonitore) vorgesehen, um die Pu-Akkumulationen möglichst frühzeitig erkennen zu können. Es liegt auf der Hand, daß diese Maßnahmen zusammen mit ihren notwendigen Wirksamkeitskontrollen aufwendig und kostspielig sind.

Ein weiterer Mangel beim traditionellen PUREX-Prozeß ist die unbefriedigend geringe Abtrennung des Np bei der ersten Extraktion. In der Regel werden etwa nur 10% des im Kernbrennstoff enthaltenden Np in den HAW abgeführt. Dadurch werden in den Reinigungszyklen aufwendige Maßnahmen zu dessen Abtrennung notwendig.

Der Erfindung liegt die Aufgabe zugrunde, ein quasi-inhärent kritikalitätssicheres Verfahren zu schaffen, mit welchem, insbesondere im Bereich Extraktion - Spaltproduktwäsche -Weiterverarbeiten des wäßrigen, hochaktiven Abfalls, unerwünschte Plutonium-Akkumulationen und die Bildung einer schweren organischen, Plutonium enthaltenden Phase sicher vermieden werden können.

Die Aufgabe wird erfindungsgemäß dadurch gelöst, daß die vom Auflöser kommende Uran, Plutonium, Neptunium, weitere Transuranelemente, Spaltprodukte, Korrosions-, Aktivierungs- und andere Verunreinigungs-Produkte enthaltende wäßrige, salpetersaure Lösung, bevor sie als Speiselösung in die erste Extraktionsapparatur zur Extraktion der Wertstoffe Uran und Plutonium aus der wäßrigen Phase in die organische Phase eingeführt wird, in ihren Konzentrationen und/oder die Extraktionsapparatur auf eine Temperatur so eingestellt wird, daß folgende Ungleichung erfüllt ist:

$$T_E > 401 + (0.06676 U_f - 0.3367 Pu_f - 327.4 H_f) \cdot$$

$$\cdot e^{0.00008179(U_f + Pu_f)H_f} \cdot H_f - 0.9593$$

wobei

$T_E$ = Temperatur der Lösungen im Extraktor ( °C)

$U_f$ = Urankonzentration der Speiselösung (g/l)

$Pu_f$ = Plutoniumkonzentration der Speiselösung (g/l)

$H_f$ = Salpetersäurekonzentration der Speiselösung (M/l)

e = Basis des natürlichen Logarithmensystems

bedeutet.

Die Formel legt die Mindestbedingungen zur Lösung der Aufgabe fest und gibt die Mindestverhältnisse für die Konzentrationsparameter an. Die Konzentrationsparameter stehen in engem Zusammenhang mit der Festlegung des Flußverhältnisses. Es ist überraschend, daß in die Betriebszustände, die die Formel beschreibt, der Anteil des TBP in der Extraktionsmittelphase nicht eingreift. Diese bedeutet, daß das erfindungsgemäße Verfahren nicht nur im Standard-30%TBP-Prozeß angewendet werden kann, sondern auch in ähnlichen, TBP in anderen Konzentrationen verwendenden Wiederaufarbeitungs-Prozessen.

Eine vorteilhafte Ausbildung des erfindungsgemäßen Verfahrens ist dadurch gekennzeichnet, daß ein lokaler Sättigungsgrad des Extraktionsmittels mit Uran, Pu und $HNO_3$ mit Hilfe der wäßrigen und der organischen Phase erzwungen wird. Die Einstellung des wäßrigen Flusses und/oder des organischen Flusses erfolgt mit Hilfe von an mindestens einer Stelle des Prozeßablaufes detektierten Konzentrationswerten für wenigstens Uran und/oder Plutonium und/oder Spaltprodukte und/oder $HNO_3$ und/oder Werten für die Temperatur und/oder Dichte und/oder Leitfähigkeit der Lösung und/oder Absorption elektromagnetischer Wellen und/oder Kapazität und/oder Induktivität im Vergleich zu Sollwerten.

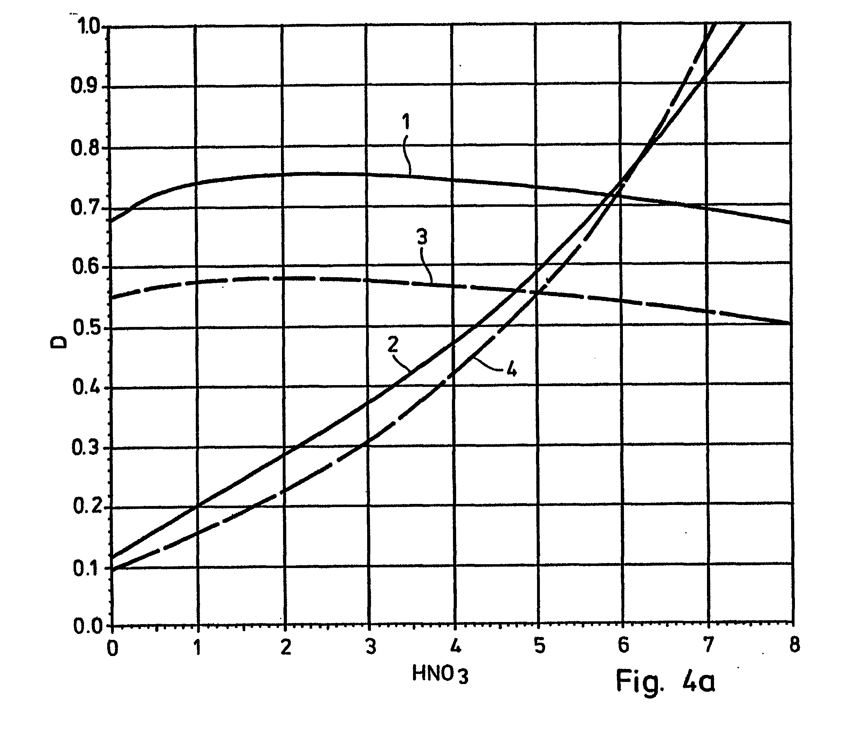

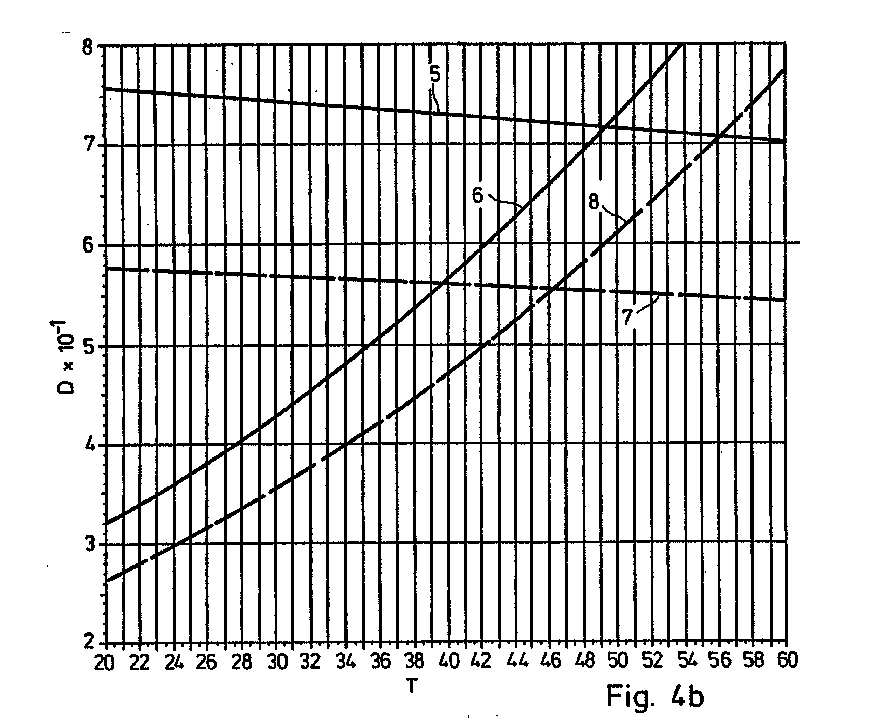

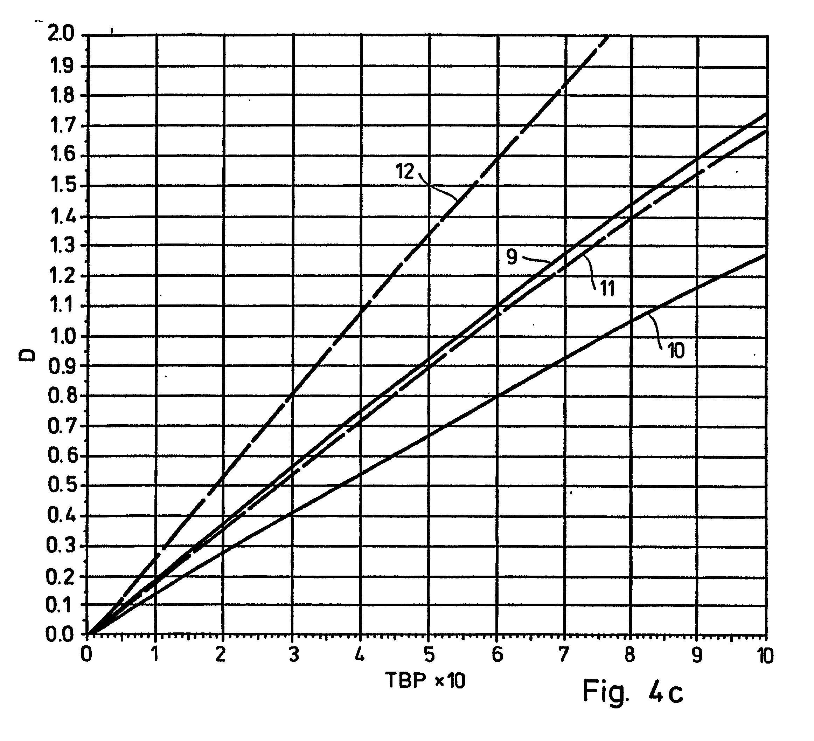

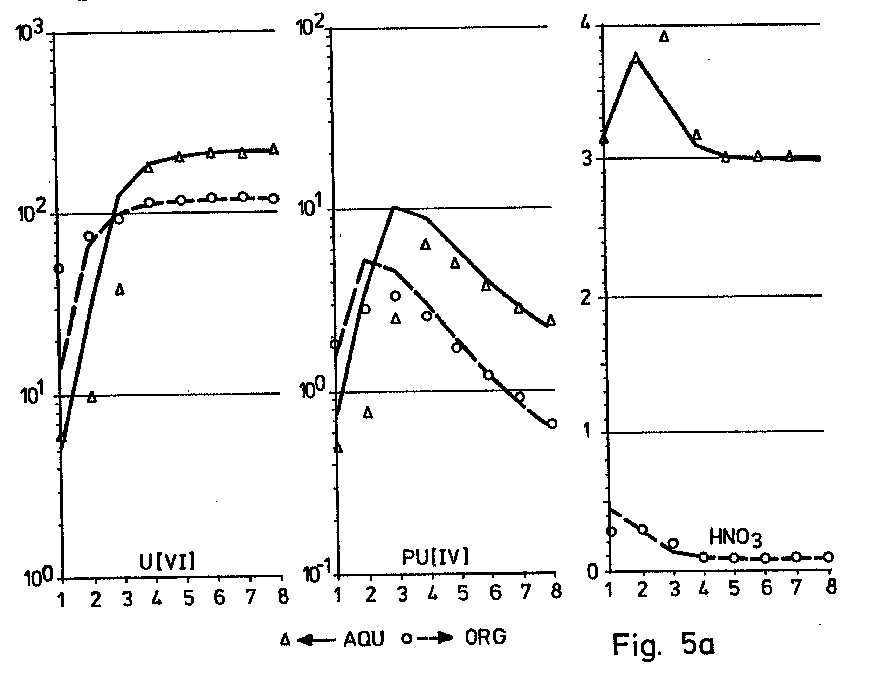

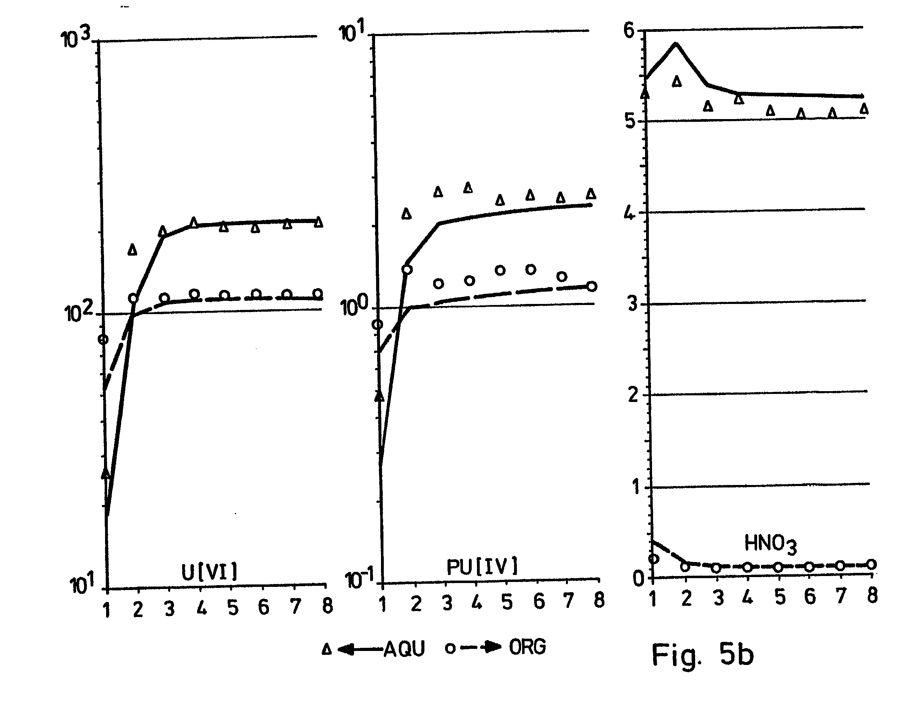

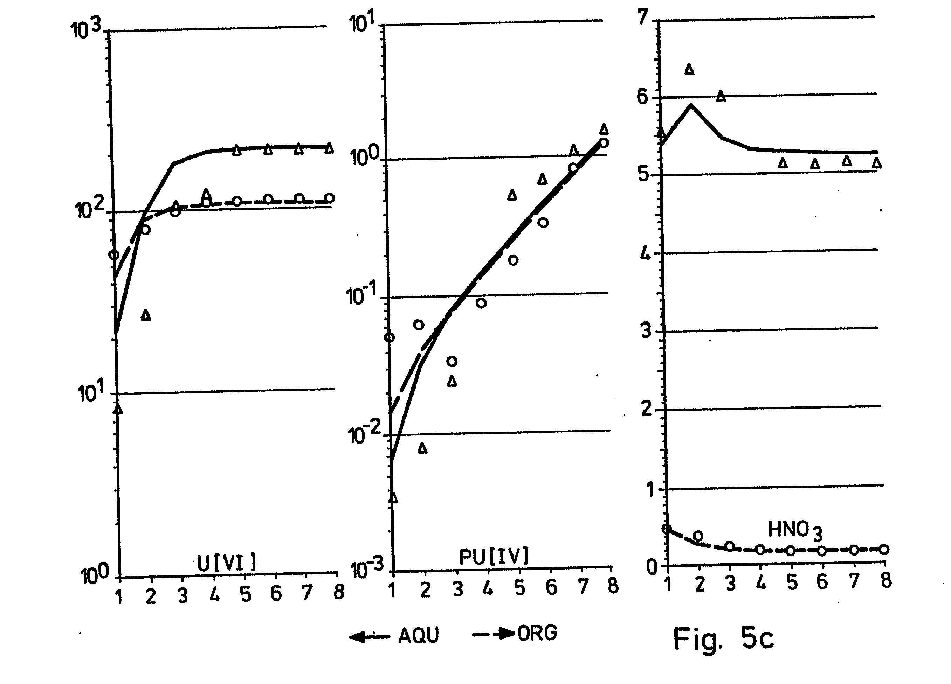

Das Verfahren hat einen ausgesprochen fehlerfreundlichen Charakter, d.h. auch durch Fehloperationen verursachte nichtbestimmungsgemäße Betriebszustände vermeiden das Kritikalitätsrisiko und halten die Pu-Verluste klein. Darüber hinaus kann mit einer wesentlich verbesserten Abtrennung der Spaltprodukte und des Np schon bei der Extraktion gerechnet werden, wenn der Extraktor im Hochsättigungsbereich betrieben wird, was das erfindungsgemäße Verfahren, jedoch nicht (oder nur in beschränktem Umfang) der traditionelle PUREX-Prozeß gestattet. Die Grundlage der Erfindung ist die Auswahl von Prozeßbedingungen, bei denen die oben erwähnte Komplexbildungsreihenfolge nicht mehr gilt und Pu(IV) stärkere Komplexe mit TBP bildet als $UO_2^{2+}$. Aus der Literatur der Verteilungsmessungen für die einzelnen Komponenten Pu(IV)-$HNO_3$/TBP bzw. $UO_2^{2+}$-$HNO_3$/TBP sind solche Bedingungen nicht erkennbar. Sowohl bei Variation der Säurekonzentration ( 0.5 - 6 M) als auch bei Variation der Temperatur (im Bereich von 20°-40 °C) hat der Verteilungskoeffizient für $UO_2^{2+}$ stets einen höheren Wert als der für Pu(IV). Auf thermodynamischen Erkenntnissen beruhende Computerberechnungen der Komplexbildung zeigten, daß bei $HNO_3$-Konzentrationen über 5 M und/oder bei erhöhter Temperatur Bedingungen existieren, unter denen Plutonium stärker als Uran mit TBP komplexiert (s. Fig. 4). Im Gegenstrom durchgeführte Extraktionsexperimente zeigten, daß tatsächlich bei Säurekonzentrationen über 4 M $HNO_3$ und erhöhter Temperatur Pu(IV) besser extrahiert wird als $UO_2^{2+}$, so daß unter diesen Prozeßbedingungen nicht mehr bevorzugt Pu(IV) im wäßrigen Raffinat HAW den Extraktor verläßt, sondern $UO_2^{2+}$. Auch die Pu-Akkumulationen werden nicht mehr beobachtet. Fig. 5 bis 7 zeigen berechnete Konzentrationsprofile für die drei im PUREX-Prozeß üblichen Extraktortypen und den unter nichtbestimmungsgemäßen Prozeßbedingungen bei Anwendung des traditionellen Prozesses auftretenden Konzentrationsverlauf mit bevorzugtem Pu-Austrag im HAW und den Pu-Akkumulationen. Die Figuren zeigen aber auch, daß die Extraktionsflanke des Urans beim erfindungsgemäßen Verfahren weit vor der Flanke des Plutoniums verläuft, was die schlechtere Extrahierbarkeit des Urans beweist. Dieser Sachverhalt erlaubt nun aber eine bessere Ausnutzung des Extraktors, in der Art, daß eine beträchtliche Anzahl der Stufen einer Mischabsetzerbatterie oder einer Zentrifugalextraktorbatterie bzw. eine beträchtliche Länge einer gepulsten Siebbodenkolonne mit Uranhochsättigung des Extraktionsmittels betrieben werden kann, was die Spaltproduktabtrennung, insbesondere die von Ru, und auch die Np-Abtrennung begünstigt. Auch die erhöhte Temperatur trägt zu dieser Verbesserung bei. Für Ru wird eine Steigerung des Dekontaminationsfaktors unter diesen Bedingungen um einen Faktor zwischen 10 und 100 und für Np eine Verbesserung der Abtrennung um einen Faktor 4 erreicht, wie vorläufige Experimente und Modellrechnungen zeigen. Die Vermeidung von Uranverlusten im HAW kann durch eine einfache Detektierung der Extraktionsflanke über Temperaturmeßstellen (positive Wärmetönung bei Komplexbildung) oder Dichtemeßstellen entlang des Extraktors sichergestellt werden. Signifikante Pu-Verluste sind unter keinen Umständen zu erwarten, da diese bei dem erfindungsgemäßen Verfahren erst bei massivem U-Durchbruch im HAW auftreten. Auf diese Art und Weise - durch verbesserte Spaltproduktabtrennung schon während der Extraktion - kann letztlich ein Spaltproduktwäscher gespart werden, so daß nur noch ein einziger Spaltproduktwäscher nach der Extraktion benötigt wird, der vorzugsweise mit minderer $HNO_3$-Konzentration betrieben wird, um Zr und Tritium aus dem Extraktionsmittel auszuwaschen.

Im traditionellen Verfahren wird das Flußverhältnis org/aqu so festgelegt, daß bei vorgegebenen Konzentrationen der Speiselösungen die Sättigung des TBP an allen Stellen des Extraktors erheblich (z.B. 10-30%) unterschritten wird. Erst bei einer Verringerung des Flußverhältnisses auf einen Wert, der die Sättigung des TBP erreicht oder überschreitet, treten U- und Pu-Verluste und der Pu-Bauch (=Pu-Akkumulation im Konzentrationsprofil über die Extraktionsstufen hinweg) auf.

Die Erfindung verhindert bei allen Flußverhältnissen die Bildung des Pu-Bauches und verringert bei allen Flußverhältnissen den prozentualen Anteil von Pu im Raffinat.

Ein weiterer besonderer Vorteil des erfindungsgemäßen Verfahrens liegt in der Möglichkeit, die Abtrennung der Spaltprodukte, des Np und von weiteren Verunreinigungsprodukten zu verbessern. Dies erfolgt dadurch, daß man die Wertstoffkonzentrationen der Speiselösung erheblich unter die üblichen Werte des traditionellen Verfahrens absenkt, so daß das Flußverhältnis (berechnet aus der angestrebten Sättigung) sinkt. Dadurch werden die für die Abtrennung maßgeblichen Extraktionsfaktoren (=Verteilungskoeffizient mal Flußverhältnis) der Spaltprodukte und Np etc. stark gesenkt; insbesondere bei hoher Sättigung wird so eine deutliche Verbesserung der Abtrennung erreicht. Bei dem erfindungsgemäßen Verfahren ist also neben dem Parameter "Sättigung" auch noch der Parameter "Flußverhältnis" zur Verbesserung der Abtrennung verfügbar.

Eine der in der Praxis mit Erfolg ausführbaren Mindest-Kombinationen von Verfahrensbedingungen im Viel-Parameter-System der erfindungsgemäßen Verfahrens ist durch folgende Eckpunkte gegeben: Beladung der wäßrigen Phase (Speiselösung HAF) mit
$U_f = 275\ g/l;\ Pu_f = 3\ g/l;\ H_f = 3\ M/l$
bei einer Temperatur im Extraktionsapparat von>41,2°C.

Die Temperatur in der Apparatur bzw. in den Lösungen soll aus Korrosionsgründen und aus Gründen anderer Eigenschaften der Lösungen 80 °C nicht übersteigen.

Im folgenden wird die Erfindung mit Hilfe der Beschreibung einiger Durchführungsbeispiele in Verbindung mit den Figuren näher erläutert.

Beispiel 1:

Abhängigkeit des Plutonium-Verhaltens während einer Extraktion unter nichtbestimmungsgemäßen Verfahrensbedingungen von Veränderungen im Parameterfeld.

A PUREX-Verfahren nach den bisher üblichen Verfahrensbedingungen ausgeführt:
a) Wenn bei der Extraktion der Wertstoffe Uran und Plutonium aus einem Leichtwasserreaktor-(LWR)-Brennstoff, welcher 1 Gew.-% Pu enthält, in einem 12-stufigen Mischabsetzer bei einer Temperatur von 25 °C sich das Verhältnis der Flüsse der organischen Phase HAX (=TBP-Lösung) zu der wäßrigen Phase HAF (=Speiselösung, Wertstoffe, Spaltprodukte, etc. enthaltend) gewollt oder ungewollt verändert, beispielsweise durch Reduzierung von HAX, so ergibt sich ein Verlauf der Extraktion, wie aus den Kurven der Konzentrationsprofile für Uran, Plutonium und $HNO_3$ der Figur 2 hervorgeht. Die wäßrige Speiselösung HAF, die 3 molar an $HNO_3$ ist, wird in der zwölften Stufe eingespeist und verläßt den Mischabsetzer aus der ersten Stufe. In gegenläufiger Richtung wird die organische Lösung HAX in die erste Stufe eingeleitet und aus der zwölften Stufe wieder abgezogen. Wie die berechneten Kurven zeigen, kummuliert sich das Plutonium unter nichtbestimmungsgemäßen Bedingungen auf, sowohl in der

4

wäßrigen als auch in der organischen Phase, wobei die maximalen Plutoniumkonzentrationen in der wäßrigen Phase sich in den Stufen 3 und 4 und in der organischen Phase sich in den Stufen 2 und 3 befinden. Die Plutoniumakkumulation, im folgenden als Pu-Bauch bezeichnet, muß aus Sicherheitsgründen vermieden werden.

b) In analoger Weise wurden die Konzentrationsprofile für U, Pu und $HNO_3$ im Verlauf einer Extraktion von Schnellbrüter-Brennstoff mit 11 Gew.-% Pu unter sonst gleichen Bedingungen berechnet. Auch hier hat eine Reduzierung von HAX in einem 12-stufigen Mischabsetzer bei 25 °C und bei einer $HNO_3$-Molarität von 3 in der Speiselösung eine Akkumulation von Pu(IV) sowohl in der organischen als auch in der wäßrigen Phase zur Folge (Figur 3).

B Die Pu-Bäuche in den Pu(IV)-Konzentrationsprofilen treten dann auf, wenn bei Hochsättigung der organischen Phase der Verteilungskoeffizient $D_U$ größer ist als der Verteilungskoeffizient $D_{Pu}$. In Figur 4a wurden die Verteilungskoeffizienten (berechnet) von Uran und Plutonium als Funktion der wäßrigen Salpetersäurekonzentration aufgetragen. Konstant gehalten wurden die Pu-Konzentration der wäßrigen Phase mit 1 g/l, die Temperatur mit 25 °C und die TBP-Konzentration in der organischen Phase mit 30 Volumen-%. Die Uran-Konzentration in der wäßrigen Phase betrug im ersten Falle 150 g/l (Kurven 1 und 2) und im zweiten Falle 200 g/l (Kurven 3 und 4).

Kurve 1: $D_U$

Kurve 2: $D_{Pu}$

Kurve 3: $D_U$

Kurve 4: $D_{Pu}$

Bis zu einer $HNO_3$-Konzentration von ca. 5 mol/l sind in beiden Fällen die Werte für $D_U$ größer als die Werte für $D_{Pu}$. Für die Uran-Konzentration von 150 g/l in der wäßrigen Phase wird $D_{Pu}$ größer als $D_U$ bei 5,8 mol/l $HNO_3$. Für die Uran-Konzentration 200 g/l in der wäßrigen Phase wird $D_{Pu}$ größer als $D_U$ bei 5,1 mol/l $HNO_3$. Dies bedeutet, daß bei den genannten Verfahrensbedingungen im ersten Fall bei 5,8 mol/l $HNO_3$ im anderen Fall bei 5,1 mol/l $HNO_3$ die Pu-Bäuche verschwinden.

In Figur 4b sind die Verteilungskoeffizienten (berechnet) von Uran und Plutonium als Funktion der Temperatur aufgetragen. Konstantgehalten wurden hierbei die Pu-Konzentration von 1 g/l in der wäßrigen Phase, die $HNO_3$-Konzentration mit 3 mol/l in der wäßrigen Phase und die TBP-Konzentration in der organischen Phase mit 30 Volumen-%. Die Uran-Konzentrationen in der wäßrigen Phase waren die gleichen wie für die Figur 4a.

Kurve 5: $D_U$ für 150 g U/l

Kurve 6: $D_{Pu}$ für 150 g U/l

Kurve 7: $D_U$ für 200 g U/l

Kurve 8: $D_{Pu}$ für 200 g U/l

Wie die Kurven zeigen, wird bei einer Uran-Konzentration von 150 g/l $D_{Pu}$ größer als $D_U$ bei 49 °C und bei einer Uran-Konzentration von 200 g/l $D_{Pu}$ größer als $D_U$ bei 47° C.

Figur 4c zeigt die Verteilungskoeffizienten (berechnet) von Uran und Plutonium als Funktion der TBP-Konzentration. Konstantgehalten wurde die Pu-Konzentration von 1 g/l in der wäßrigen Phase, die U-Konzentration von 200 g/l in der wäßrigen Phase und die $HNO_3$-Konzentration in der wäßrigen Phase mit 4 mol/l. Die Temperatur wurde in einem Falle auf 25 °C festgesetzt, im anderen Falle auf 50 °C.

Kurve 9: $D_U$ bei 25°C

Kurve 10: $D_{Pu}$ bei 25°C

Kurve 11: $D_U$ bei 50°C

Kurve 12: $D_{Pu}$ bei 50°C

Bei 25°C ist $D_{Pu}$ für alle TBP-Konzentrationen kleiner als $D_U$ bei 50 °C (ebenfalls für alle TBP-Konzentrationen) größer als $D_U$. Die Grenztemperatur, bei welcher $D_U$ gleich $D_{Pu}$ wird, ist 35,1 °C.

### Beispiel 2:

Vergleich der berechneten Konzentrationsprofile mit experimentell in einem 8-stufigen Mischabsetzer ermittelten Konzentrationswerten von U, Pu und $HNO_3$ während des Extraktionsverlaufs.

Der Vergleich wurde durchgeführt am Verlauf des traditionellen PUREX-Prozesses im nichtbestimmungsgemäßen Betriebszustand (Figur 5 a), nach dem erfindungsgemäßen Verfahren in einem der Grenzbereiche, in welchem der Verlauf der Plutonium-Konzentrationen flache Kurvenstücke aufweist (Figur 5b) und nach dem erfindungsgemäßen Verfahren bei zusätzlich erhöhter Temperatur (50 °C; Figur 5c). Die durchgezogenen Kurven entsprechen den berechneten Konzentrationsprofilen von Uran, Plutonium und $HNO_3$ in der wäßrigen Phase und die strichlierten Kurven den Konzentrationsprofilen von U, Pu und $HNO_3$ in der organischen Phase. Die in der wäßrigen Phase gemessenen Konzentrationswerte sind durch Dreiecke gekennzeichnet, die in der organischen Phase gemessenen Konzentrationswerte durch kleine Kreise. Es fällt auf, daß die gemessenen Werte mit den Kurven eine große Übereinstimmung zeigen, die noch vorhandenen Unterschiede rühren daher, daß die Volumenflüsse für diesen extrem empfindlichen Prozeß experimentell nicht konstant genug gehalten werden können.

Verfahrensbedingungen:

Figur 5a: Verfahren nach dem Stand der Technik (nichtbestimmungsgemäßer Betrieb):
Wäßrige Speiselösung 150 ml/h, 3 molar an $HNO_3$, 211 g U/l, 2,03 g Pu/l;
Organische Phase 260 ml/h; 20 °C
Figur 5b: Erfindungsgemäßes Verfahren:
Wäßrige Phase 150 ml/h, 5,2 molar an $HNO_3$, 211 g U/l, 2,35 g Pu/l;
Organische Phase 258 ml/h; 20 °C.
Figur 5c: Erfindungsgemäßes Verfahren:
Wäßrige Phase 150 ml/h, 5,2 molar an $HNO_3$, 211 g U/l, 2,35 g Pu/l;
Organische Phase 258 ml/h; 50 °C.
Zu Figur 5 a:
Die aus der Stufe 1 aus Mischabsetzer austretende wäßrige Abfall-Lösung bringt Uranverluste von 6 g/l und Pu-Verluste von 0,5 g/l mit sich. Die maximale Pu-Akkumulation beträgt gemessen 6,5 g/l und berechnet 10 g/l.
Um bei den Verfahrensbedingungen nach der Figur 5a den Pu-Bauch vermeiden zu können, müßte die Temperatur mindestens 45,7 °C betragen.
Zu Figur 5b:
Bei Uranverlusten mit der aus dem Mischabsetzer austretenden wäßrigen Abfall-Lösung von 26 g/l betragen hier die Pu-Verluste 0,5 g/l. Dieses Fließschema stellt gerade die Grenze zwischen einer Pu-Akkmumulation und einer Nichtakkumulation dar. Die genaue Grenztemperatur beträgt, berechnet für die in Figur 5b vorliegenden Bedingungen, 20,4 °C.
Zu Figur 5c:
Obwohl im vorliegenden Falle die Uranverluste in der wäßrigen Abfall-Lösung mit 8 g/l gemessen wurden, betrugen die Pu-Verluste nur einige mg/l. Eine Pu-Akkumulation ist nicht festzustellen, die Grenztemperatur für die vorliegenden Verfahrensbedingungen ist gleiche, wie unter Figur 5b angegeben.

Beispiel 3:

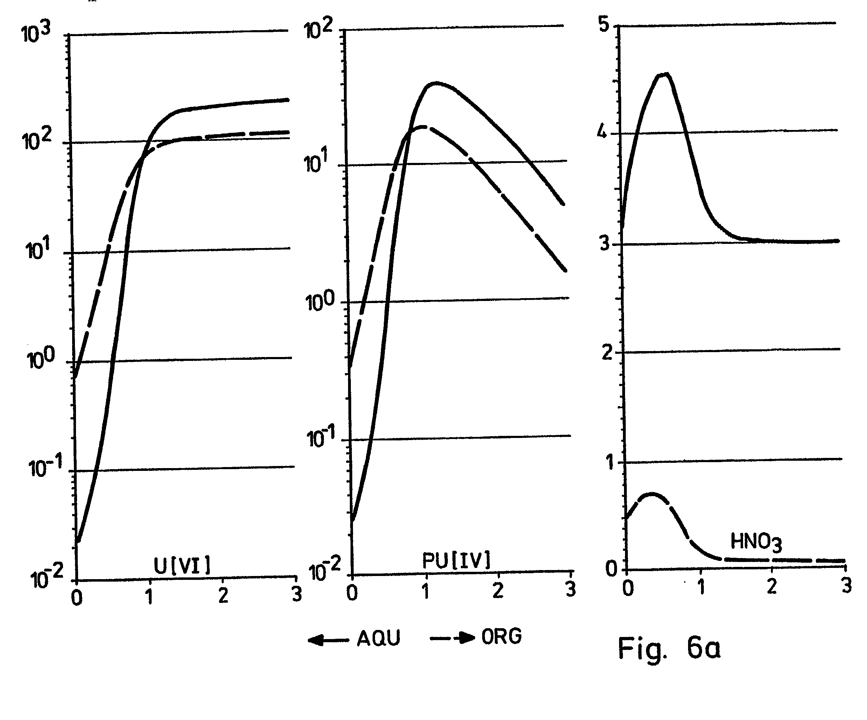

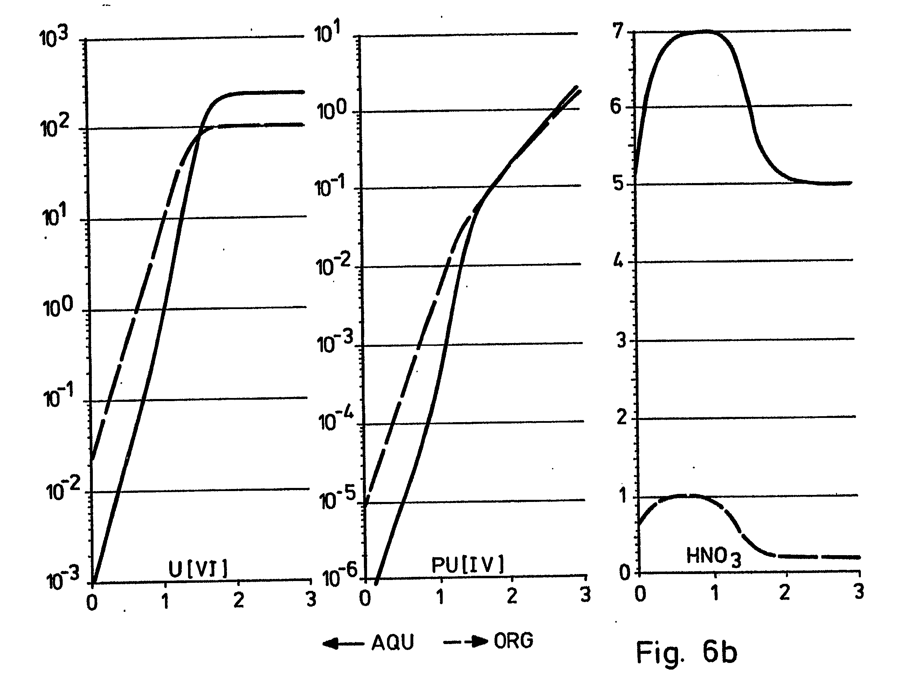

Vergleich des nach dem Stande der Technik durchgeführten Verfahrens unter nichtbestimmungsgemäßem Betrieb (Figur 6a) und des erfindungsgemäßen Verfahrens (Figur 6b) in einer Pulskolonne.
Die Konzentrationsprofile von Uran, Plutonium und $HNO_3$, die diesem Vergleich zugrundegelegt wurden, wurden jeweils berechnet.

Verfahrensbedingungen:

Figur 6a:
Wäßrige Phase 2,3 l/h, 234 g U/l, 3,4 g Pu/l, 3 molar an $HNO_3$;
Organische Phase 5 l/h; 25 °C.
Figur 6b:
Wäßrige Phase 2,3 l/h, 234 g U/l, 3,4 g Pu/l, 5 molar an $HNO_3$;
Organische Phase 5 l/h; 50 °C.
In Figur 6a ist sowohl in der wäßrigen Phase als auch in der organischen Phase ein deutlich sichtbarer Pu-Bauch festzustellen. Die maximale Pu-Akkumulation in der wäßrigen Phase betrug ca. 43 g/l. Demgegenüber trat eine Pu-Akkumulation in der Figur 6b nicht mehr auf. Die Pu-Verluste waren deutlich kleiner als die U-Verluste.
Um bei den Verfahrensbedingungen nach der Figur 6a einen Pu-Bauch vermeiden zu können, hätte die Temperatur auf mindestens 43,7 °C erhöht werden müssen.
Die Grenztemperatur für die Verfahrensbedingungen nach der Figur 6b lag bei 19,6 °C.

Beispiel 4:

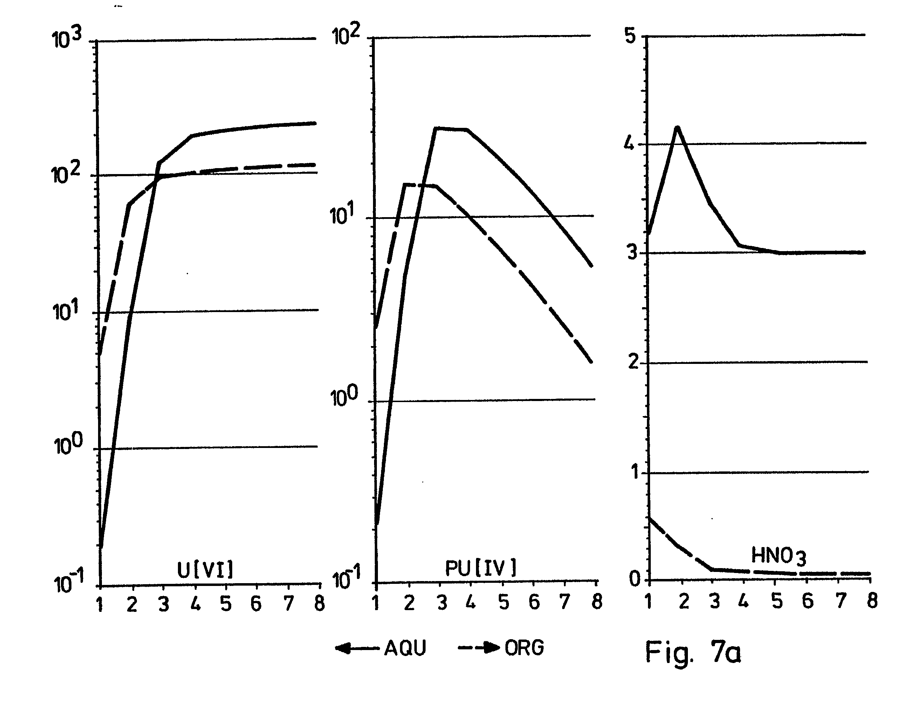

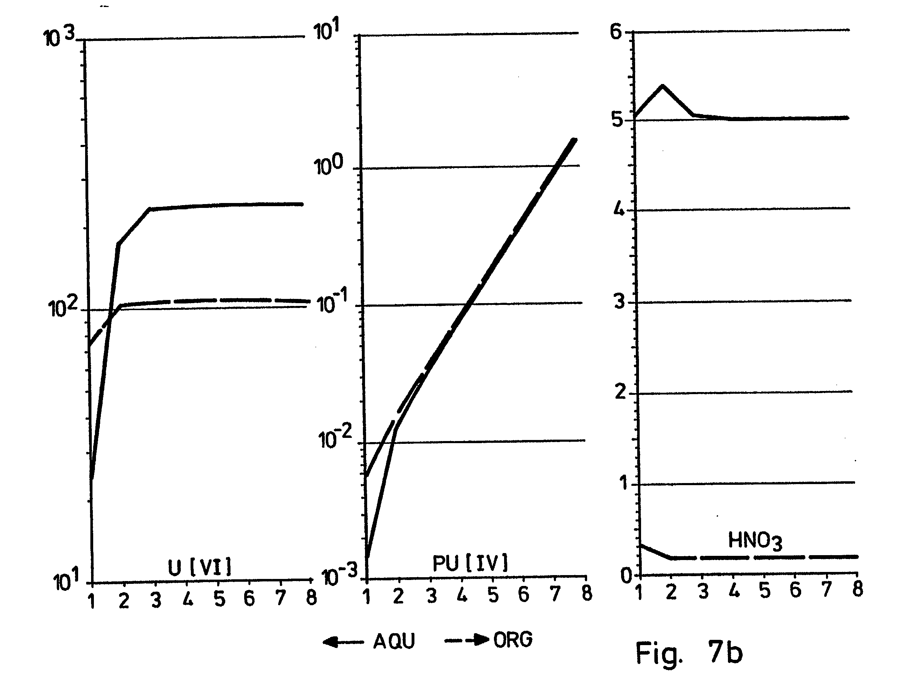

Vergleich des Verfahrens nach dem Stand der Technik unter nichtbestimmungsgemäßem Betrieb (Figur 7a) mit dem erfindungsgemäßen Verfahren (Figur 7b) jeweils in einem Zentrifugalextraktor (nach berechneten Konzentrationsprofilen). Die Verfahrensbedingungen waren die gleichen wie in Beispiel 3, d.h. die Verfahrensbedingungen der Figur 7a entsprachen denen der Figur 6a und die Verfahrensbedingungen der Figur 7b entsprachen denen der Figur 6b. Wie aus Figur 7a zu ersehen ist, betrug die maximale Pu-Akkumulation in der wäßrigen Phase ca. 32 g/l. In Figur 7b trat eine Pu-Akkumulation nicht mehr auf. Die Pu-Verluste waren deutlich kleiner als die U-Verluste. Um in Figur 7a einen Pu-Bauch zu vermeiden, hätte man die Temperatur auf mindestens 43,7 °C anheben müssen. Die Grenztemperatur für die Bedingungen nach der Figur 7b lag bei 19,6 °C.

## Patentansprüche

1. Verfahren zur Verbesserung der Kritikalitätssicherheit in einem Flüssig-flüssig-Extraktionsprozeß für bestrahlte Kernbrenn- und/oder Brutstoffe, insbesondere bei nicht bestimmungsgemäßen Betriebzuständen, die zu lokalen Hochsättigungen des Extraktionsmittels führen, dadurch gekennzeichnet, daß die vom Auflöser kommende Uran, Plutonium, Neptunium, weitere Transuranelemente, Spaltprodukte, Korrosions-, Aktivierungs- und andere Verunreinigungs-Produkte enthaltende wäßrige, salpetersaure Lösung, bevor sie als Speiselösung in die erste Extraktionsapparatur zur Extraktion der Wertstoffe Uran und Plutonium aus der wäßrigen Phase in die organische Phase eingeführt wird, in ihren Konzentrationen und/oder die Extraktionsapparatur auf eine Temperatur so eingestellt wird, daß folgende Ungleichung erfüllt ist:

$$T_E > 401 + (0.06676 U_f - 0.3367 Pu_f - 327.4 H_f) \cdot$$

$$\cdot e^{0.00008179(U_f + Pu_f)H_f} \cdot H_f^{-0.9593}$$

wobei
$T_E$ = Temperatur der Lösungen im Extraktor (°C)
$U_f$ = Urankonzentration der Speiselösung (g/l)
$Pu_f$ = Plutoniumkonzentration der Speiselösung (g/l)
$H_f$ Salpetersäurekonzentration der Speiselösung (M/l)
$e$ = Basis des natürlichen Logarithmensystems
bedeutet.

2. Verfahren nach Anspruch 1, dadurch gekennzeichnet, daß ein lokaler Sättigungsgrad des Extraktionsmittels mit Uran, Pu und $HNO_3$ mit Hilfe der Flüsse der wäßrigen und der organischen Phase erzwungen wird.

3. Verfahren nach Anspruch 1, dadurch gekennzeichnet, daß die Einstellung des wäßrigen Flusses und/oder des organischen Flusses mit Hilfe von an mindestens einer Stelle des Prozeßablaufes detektierten Konzentrationswerten für wenigstens Uran und/oder Plutonium und/oder Spaltprodukte und/oder $HNO_3$ und/oder Werten für die Temperatur und/oder Dichte und/oder Leitfähigkeit der Lösung und/oder Absorption elektromagnetischer Wellen und/oder Kapazität und/oder Induktivität im Vergleich zu Sollwerten erfolgt.

## Revendications

1. Procédé pour l'amélioration de la sécurité par rapport à la criticité dans un processus d'extraction liquide-liquide pour matières fertiles et/ou combustibles nucléaires irradiés, en particulier dans des conditions anormales de fonctionnement qui entraînent de fortes saturations locales de l'agent d'extraction, caractérisé en ce que, avant de la conduire en tant que solution d'alimentation dans le premier appareil d'extraction en vue de l'extraction des éléments précieux uranium et plutonium de la phase aqueuse dans la phase organique, on règle les concentrations de la solution aqueuse d'acide nitrique provenant du dispositif de dissolution et renfermant de l'uranium, du plutonium, du neptonium, d'autres éléments transuraniens des produits de fission et des produits de corrosion d'activation ainsi que d'autres impuretés et/ou la température de l'appareillage d'extraction de façon à satisfaire à l'inégalité suivante:

$$T_E > 401 + (0,06676 U_f - 0,3367 Pu_f - 327,4\ H_f)$$
$$\cdot e^{0,00008179\ (U_f + Pu_f)H_f} \cdot H_f^{-0,9593}$$

dans laquelle
$T_E$ = température des solutions dans l'extracteur (°C)
$U_f$ = concentration en uranium de la solution d'alimentation (g/l)
$Pu_f$ = concentration en plutonium de la solution d'alimentation (g/l)
$H_f$ = concentration en acide nitrique de la solution d'alimentation (M/l)
$e$ = base du système des logarithmes naturels.

2. Procédé selon la revendication 1, caractérisé en ce que l'on crée par contrainte un degré local de saturation de l'agent d'extraction en uranium, Pu et $HNO_3$ à l'aide du débit de la phase aqueuse et de la phase organique.

3. Procédé selon la revendication 1, caractérisé en ce que l'ajustement du flux aqueux et/ou du flux organique est effectué à l'aide de valeurs des concentrations détectées en au moins un point du déroulement du processus, pour au moins l'uranium et/ou le plutonium et/ou les produits de fission et/ou l'HNO₃ et/ou à l'aide de valeurs de la température et/ou de la densité et/ou de la conductivité de la solution et/ou de l'absorption d'ondes électromagnétiques et/ou de la capacité et/ou de l'inductivité, comparées à des valeurs de consigne.

## Claims

1. Method of improving the criticality security in a liquid-liquid extraction process for irradiated nuclear fuels and/or breeder materials, more especially under non-determinate operational conditions which lead to local high saturations of the extraction agent, characterised in that, prior to being introduced, as feed solution, into the first extraction apparatus for the extraction of the valuable materials, uranium and plutonium, from the aqueous phase into the organic phase, the aqueous, nitric acid solution, which comes from the dissolver and contains uranium, plutonium, neptunium, additional transuranic elements, fission products, corrosion products, activation products and other pollution products is adjusted in respect of its concentrations, and/or the extraction apparatus is adjusted to a temperature, so that the following unbalanced equation is satisfied

$$T_E > 401 + (0.06676 U_f - 0.3367 Pu_f - 327.4 H_f) \cdot$$

$$\cdot e^{0.00008179(U_f + Pu_f)H_f} \cdot H_f^{-0.9593},$$

wherein
$T_E$ = temperature of the solutions in the extractor (°C);
$U_f$ = uranium concentration in the feed solution (g/l);
$Pu_f$ = plutonium concentration in the feed solution (g/l);
$H_f$ = nitric acid concentration in the feed solution (M/l);
$e$ = base for the natural logarithmic system.

2. Method according to claim 1, characterised in that a local saturation degree of the extraction agent with uranium, Pu and HNO₃ is induced by means of the flows of the aqueous phase and of the organic phase.

3. Method according to claim 1, characterised in that the adjustment of the aqueous flow and/or of the organic flow is effected by means of concentration values, detected at at least one location during the process, for at least uranium and/or plutonium and/or fission products and/or HNO₃ and/or values for the temperature and/or density and/or conductivity of the solution and/or absorption of electromagnetic waves and/or capacitance and/or inductance compared with desired values.

# Fig. 1

U [VI]

PU [IV]

HNO₃

←— AQU    -→ ORG

Fig. 2

EP 0 267 393 B1

Fig. 3

Fig. 4a

EP 0 267 393 B1

Fig. 4b

EP 0 267 393 B1

Fig. 4c

EP 0 267 393 B1

Fig. 5a

U[VI]

PU[IV]

HNO₃

Δ ◄─── AQU    ○ ─ ─► ORG

Fig. 5b

EP 0 267 393 B1

Fig. 5c

AQU ◀— —▶ ORG

EP 0 267 393 B1

Fig. 6a

Fig. 6b

Fig. 7a

Fig. 7b